# NEUE EUROPÄISCHE PATENTSCHRIFT

(11) **EP 1 761 196 B2**
(45) Veröffentlichungstag und Bekanntmachung des Hinweises auf die Entscheidung über den Einspruch: **15.06.2011**
(45) Hinweis auf die Patenterteilung: 27.08.2008
(21) Anmeldenummer: 05745593.3
(22) Anmeldetag: 03.06.2005
(51) Int. Cl.: A61C 13/00, A61C 8/00

(54) **DENTALIMPLANTAT AUF ZIRKONOXIDBASIS UND VERFAHREN ZUR HERSTELLUNG EINES DENTALIMPLANTATES**
ZIRCONIUM OXIDE-BASED DENTAL IMPLANT AND METHOD FOR PRODUCING SAID DENTAL IMPLANT
IMPLANT DENTAIRE A BASE D'OXYDE DE ZIRCONIUM ET PROCEDE POUR PRODUIRE UN IMPLANT DENTAIRE

(30) Priorität: 08.06.2004 DE 102004027959
(43) Veröffentlichungstag der Anmeldung: 14.03.2007
(73) Patentinhaber: ZV3 - Zircon Vision GmbH, 82515 Wolfratshausen (DE)
(72) Erfinder: FEITH, Johan, 80805 München (DE)
(74) Vertreter: Bohnenberger, Johannes
(86) Internationale Anmeldenummer: PCT/EP2005/006010
(87) Internationale Veröffentlichungsnummer: WO 2005/120386

(56) Entgegenhaltungen:
- EP-A- 1 529 498
- DE-A1- 10 159 683
- DE-A1- 19 530 981
- US-A1- 2002 155 412
- US-A1- 2003 104 338

## Beschreibung

Die Erfindung betrifft ein Dentalimplantat nach dem Oberbegriff des Patentanspruches 1.

Dentalimplantate werden seit einiger Zeit erfolgreich eingesetzt. In vielen Fällen wird als Material Titan verwendet, mit dem eine sichere Verbundosteogenese erreicht werden kann. Allerdings sind optische Probleme nur durch sehr aufwändige Maßnahmen zu vermeiden.

Aus der DE 101 59 683 ist ein Dentalimplantat der eingangs genannten Art bekannt, bei welchem der Übergang zwischen dem Implantat, dem Abutment und der aufgesetzten Suprakonstruktion keine derartigen ästhetischen Probleme aufgrund des gewählten Materials auf Zirkonoxidbasis aufweist. Problematisch hierbei ist die Tatsache, dass derartige "konfektionierte" Implantate in vielen verschiedenen Varianten beim Zahntechniker oder im Herstellerbetrieb vorgehalten werden müssen, um dann nach entsprechender Vermessung am Patienten möglichst passend herausgesucht werden zu können. Dennoch ist eine optimale Anpassung kaum möglich.

Aus der US 2003/104338 A1 sowie der EP 1 529 498 sind Dentalimplantate bekannt, deren Oberflächen teilweise aufgeraut sind. Die Aufrauung erfolgt hierbei jeweils nach dem Sintern des Materials.

Der Erfindung liegt die Aufgabe zu Grunde, ein Dentalimplantat der eingangs genannten Art dahin gehend weiter zu bilden bzw. eine Herstellungsverfahren hierfür aufzuzeigen, dass eine optimale Anpassung bei leichter Einsetzbarkeit und guten Dauereigenschaften sichergestellt wird.

Diese Aufgabe wird bei einem Dentalimplantat für einen Patienten, umfassend ein Verankerungsteil zum Verankern des Dentalimplantats im Knochen und ein Abutment zur Befestigung einer Krone oder dergleichen Suprakonstruktion, das mit dem Verankerungsteil verbunden oder verbindbar ist, wobei das Verankerungsteil und das Abutment auf Zirkonoxidbasis gefertigt sind, dadurch gelöst, dass das Verankerungsteil und/oder das Abutment Sonderabschnitte entsprechend individuellen Abmessungen von Knochen und/oder Zahnfleisch des Patienten aufweist, welche eine aufgerauhte und zur Verwachsung mit dem Knochen und/oder zum Einwachsen in das Zahnfleisch ausgebildete Oberfläche aufweisen, wobei die Sonderabschnitte am Grünkörper vor dessen abschließendem Sintern gefertigt sind.

Ein wesentlicher Punkt der Erfindung liegt darin, dass nur grob konfektionierte Grünkörper (Verankerungsteil und Abutment) vorgehalten werden müssen, während die für die Verbundosteogenese notwendige Oberflächenbearbeitung nach entsprechenden Vermessungsvorgaben (tomographische Aufnahmen) im Dentallabor vorgenommen werden kann. Dadurch, dass am Grünkörper gearbeitet wird, kann eine optimale Oberflächenaufrauhung stattfinden, die am fertig gesinterten Produkt aufgrund dessen großer Härte fast unmöglich ist. Durch diese individuelle Oberflächengestaltung können auch Knochendefekte durch Osteogenese in optimaler Weise behoben werden.

Vorzugsweise werden die Sonderabschnitte auf der Oberfläche des Grünkörpers mittels Sandstrahlen aufgerauht. Diese Technik ist sehr einfach und führt zu einer die Osteogenese optimal fördernden Oberflächenrauhigkeit.

Das Verankerungsteil und das Abutment sind bei einer bevorzugten Ausführungsform der Erfindung einstückig ausgebildet. Dadurch wird nicht nur eine optimale Haltbarkeit erzielt, vielmehr ergibt sich auch ein in ästhetischer Hinsicht optimales Implantat.

Der Übergangsbereich zwischen dem Verankerungsteil und dem Abutment wird vorzugsweise entsprechend den individuellen Abmessungen des Knochens des Patienten insbesondere durch Bearbeitung des Grünkörpers gefertigt. Dadurch kann den individuellen Gegebenheiten besonders gut Rechnung getragen werden.

Das Verankerungsteil weist bei einer Ausführungsform der Erfindung eine zum Einklopfen in eine zylindrische oder konische Bohrung im Knochen ausgebildete Oberfläche und eine konzentrische Bohrung zur Aufnahme eines Stiftes auf, zum Halten, Führen und Einklopfen des Verankerungsteils. Dadurch ist ein besonders exaktes Einbringen des Implantates möglich, ohne dass allzu aufwändige Schablonen oder Justiereinrichtungen verwendet werden müssten. Bei einer einstückigen Ausbildung von Verankerungsteil und Abutment führt die Bohrung vorzugsweise durch das Abutment in das Verankerungsteil hinein, so dass die exakte Einbringung des Implantates ermöglicht wird.

Das Verankerungsteil wird bei einer Ausführungsform der Erfindung vorzugsweise getrennt vom Abutment gefertigt und weist eine koaxiale Bohrung auf, die einerseits wieder zum Einklopfen mittels eines Stiftes dient und die andererseits zum Befestigen des mit einem entsprechenden Stift versehenen Abutments verwendbar ist.

Die Bohrung ist derart ausgebildet und weist insbesondere an ihrem oberen Ende eine Aufweitung auf, dass sie durch einen Silikonstopfen während einer Zeitdauer verschließbar ist, in welcher das Zahnfleisch nach dem Einklopfen des Verankerungsteil in den Knochen heilt.

Weiterhin wird die Aufgabe durch ein Verfahren zum Herstellen eines Dentalimplantates gelöst, umfassend die Schritte
- Herstellen einer 3-dimensionalen, digitalen Abbildung eines Bereiches von Knochen und Zahnfleisch eines Patienten, in welchen das Dentalimplantat einzusetzen ist,
- Anfertigen einer digitalen Repräsentation des Dentalimplantates,
- Fräsen eines Zirkonoxid-Grünkörpers entsprechend dem Dentalimplantat mit Übermaß zur Kompensation einer Schrumpfung,
- Sandstrahlen von Sonderabschnitten des Grünkörpers entsprechend der digitalen Abbildung und der digitalen Repräsentation,
- Gegebenenfalls Anbringen von Bohrungen im Grünkörper und
- Brennen/Sintern des bearbeiteten Grünkörpers.

Nachfolgend wird die Erfindung anhand von Abbildungen näher erläutert. Hierbei zeigen
- Fig. 1 eine Seitenansicht eines Dentalimplantats,
- Fig. 2 eine schematisierte Darstellung eines eingesetzten Dentalimplantates mit Darstellung von Knochen und Zahnfleisch,
- Fig. 3 eine Darstellung zur Erläuterung des Einklopfens des Dentalimplantates,
- Fig. 4 eine schematisierte Darstellung eines eingesetzten Verankerungsteils mit Knochen und Zahnfleisch,
- Fig. 5 eine Darstellung zur Erläuterung des Einsetzens eines Abutments in das Verankerungsteil,
- Fig. 6 eine Darstellung der Anordnung im vollständig eingesetzten Zustand und
- Fig. 7 eine vergrößerte Darstellung des Abschnittes XII aus Fig. 6.

In der nachfolgenden Beschreibung werden für gleiche und gleich wirkende Teile dieselben Bezugsziffern verwendet.

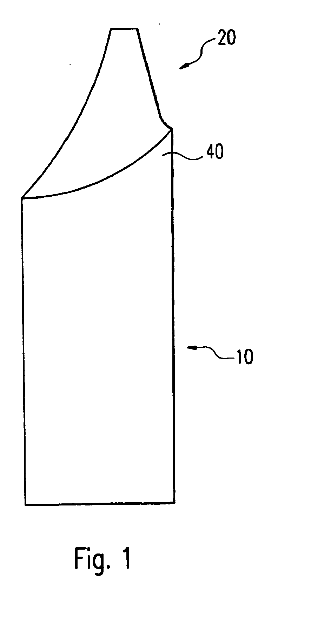

Wie in Fig. 1 gezeigt besteht das Dentalimplantat aus einem Verankerungsteil 10 zum Verankern des Dentalimplantats im Knochen und einem Abutment 20, auf welches die Suprakonstruktion in bekannter Weise aufgesetzt wird. Das Verankerungsteil weist Sonderabschnitte 40 auf und zwar insbesondere im Bereich des Übergangs zwischen Verankerungsteil 10 und Abutment 20, welche am Grünkörper durch Sandstrahlen entsprechend den Patientendaten gefertigt sind.

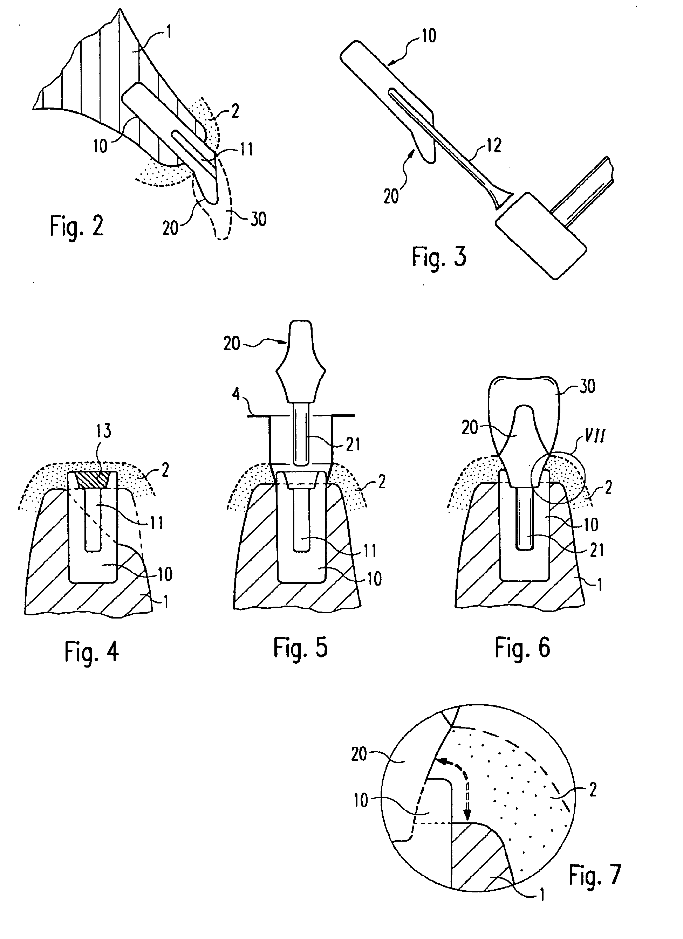

In Fig. 2 ist gezeigt, wie ein derartiges Dentalimplantat in einem Knochen 1 eingesetzt ist. Hierfür wird in den Knochen 1 ein zylindrisches oder (bei entsprechend anderer Formgebung) leicht konisches Loch in den Knochen 1 gebohrt und das Dentalimplantat eingesetzt. Hierfür ist im Dentalimplantat ein Kanal 11, insbesondere eine zylindrische Bohrung eingebracht, in welche ein Einklopfstift 12 einsetzbar ist. Dieser Einklopfstift 12 dient dazu, das Dentalimplantat zu halten und mittels eines Hämmerchens (siehe Fig. 3) fest einzusetzen.

Abschließend wird die Suprakonstruktion 30 aufgesetzt.

Besonders vorteilhaft ist diese Ausführungsform der Erfindung, bei welcher der Kanal 11 zur Aufnahme des Einklopfstiftes 12 auch durch das Abutment 20 hindurchgeführt ist, dann, wenn (wie in Fig. 2 gezeigt) in der Oberkieferfront ein Implantat eingesetzt werden soll, da dort meist ein abgewinkeltes Abutment notwendig ist. Die Formgebung erfolgt hierbei über DVT/CT und Computer derart, dass der Patient "vermessen" und über eine entsprechende Computersimulation ein optimal passendes Dentalimplantat designed wird. Entsprechend dem virtuellen Implantat wird dann im Dentallabor der reale Körper aus Zirkonoxid hergestellt.

Bei der in Fig. 4 gezeigten Alternative der Erfindung gilt es, einen Defekt des Knochens 1 zu beheben, so dass eine Knochenstruktur wie mit der unterbrochenen Linie in Fig. 4 gezeigt, entsteht. Hierfür wird ein Verankerungsteil 10 entsprechend den durch digitale Aufnahmen gewonnenen Vorgaben mit Sonderflächen 4 derart versehen, dass die Osteogenese in den vorausberechneten Bereichen stattfindet bzw. gefördert wird. Das so ausgebildete Verankerungsteil 10 wird dann in den Knochen eingesetzt, woraufhin der Kanal 11 mittels eines Silikonstopfens 13 verschlossen wird. Nach dem Einsetzen wird das Zahnfleisch über dem Implantat geschlossen. Durch dieses Schließen ergibt sich ein verbesserter Knochenaufbau dann, wenn das Implantat während der Einheilphase in die Mundhöhle ragt. Durch den Silikonstopfen 13 wird ein Einwachsen des Zahnfleisches in den Kanal 11 verhindert.

Nach der Einheilphase von Implantat und Knochen muss das Implantat mittels eines Längsschnittes oder Stanzloches (situationsabhängig) wieder freigelegt werden, wie dies in Fig. 5 gezeigt ist. Nun wird das aus Zirkonoxid mit einem Haltestück 21 einstückig gefertigte Abutment 20 unter Zuhilfenahme eines Justierröhrchens 4 aus Kunststoff in das Verankerungsteil 10 bzw. in den dort vorgesehenen Kanal 11 einzementiert, wobei das aus Kunststoff gefertigte Justierröhren insbesondere eine blutfreie Arbeitsfläche gewährleistet. Nach Entfernen der Zementreste kann direkt ein Provisorium auf das Abutment 20 zementiert werden. Ein besonderer Vorteil liegt hierbei darin, dass ein Übertragungsabdruck des Implantats nicht notwendig ist, da alle Teile im Dentallabor schon im Vorfeld angefertigt werden können und zwar auf Basis der zugelieferten Daten, die Modelle mit Schleimhautdickenmessung oder DVT/CT-Daten umfassen.

Die Verbindung zwischen Verankerungsteil 10 und Abutment 20 hat einen sogenannten "Platform-Switch", wie dieser in den Fig. 6 und 7 angedeutet ist, weil jetzt eine Klebeverbindung zwischen dem Abutment 20 und dem Verankerungsteil 10 entstanden ist, welcher eine Gewebe-Irritation hervorrufen kann. Dies ist in der Implantologie bekannt, wobei aus Untersuchungen hervorging, dass sich der Knochen auf ca. 1,6 bis 2 mm von dieser Störquelle zurückziehen kann. Deshalb ist der Abstand von der Klebespalte bis zum Knochen auf ca. 1,5 bis 2 mm zu legen (siehe Doppelpfeil in Fig. 7), um einen Knochenabbau rund um das Implantat zu verhindern.

Bei der hier gezeigten Ausführungsform der Erfindung ist noch als weiterer Vorteil zu erwähnen, dass durch die rotationssymmetrische Ausbildung des Verankerungsteils 10 (ohne Gewinde) noch kleine Rotationsänderungen während des Einsetzens vom Zahnarzt vorgenommen werden können, wobei das Einklopfen mittels der hier gezeigten Anordnung mit einem konzentrischen Kanal 11 eine besonders einfache und bei stark abgewinkeltem Abutment verwendbare Behandlungsmethode ist.

### Bezugszeichenliste

- 1: Knochen
- 2: Zahnfleisch
- 4: Justierröhrchen
- 10: Verankerungsteil
- 11: Kanal
- 12: Einklopfstift
- 13: Silikonstopfen
- 20: Abutment
- 21: Haltestift
- 30: Suprakonstruktion
- 40: Sonderabschnitt

## Patentansprüche

1. Dentalimplantat für einen Patienten, umfassend
ein Verankerungsteil (10) zum Verankern des Dentalimplantats im Knochen und ein Abutment (20) zur Befestigung einer Krone oder dergleichen Suprakonstruktion (30), das mit dem Verankerungsteil (10) verbunden oder verbindbar ist, wobei das Verankerungsteil (10) und das Abutment auf Zirkonoxidbasis gefertigt sind,
**dadurch gekennzeichnet, dass**
das Verankerungsteil (10) und/oder das Abutment (20) Sonderabschnitte (40) entsprechend individuellen Abmessungen von Knochen und/oder Zahnfleisch des Patienten aufweist, welches eine aufgeraute und zur Verwachsung mit Knochen und/oder zum Einwachsen von Zahnfleisch ausgebildete Oberfläche aufweist, wobei die Sonderabschnitte (40) am Grünkörper vor dessen abschließendem Sintern gefertigt sind.

2. Dentalimplantat nach Anspruch 1,
**dadurch gekennzeichnet, dass**
die Sonderabschnitte (40) mittels Sandstrahlen aufgerauht sind.

3. Dentalimplantat nach einem der vorhergehenden Ansprüche,
**dadurch gekennzeichnet, dass**
der Übergangsbereich zwischen Verankerungsteil (10) und Abutment (20) entsprechend individuellen Abmessungen des Knochens des Patienten insbesondere durch Bearbeitung des Grünkörpers gefertigt ist.

4. Dentalimplantat nach einem der vorhergehenden Ansprüche,
**dadurch gekennzeichnet, dass**
das Verankerungsteil und das Abutment einstückig ausgebildet sind.

5. Dentalimplantat nach einem der vorhergehenden Ansprüche,
**dadurch gekennzeichnet, dass**
das Verankerungsteil (10) eine zum Einklopfen in eine zylindrische oder konische Bohrung im Knochen ausgebildete Oberfläche und eine konzentrische Bohrung (11) zur Aufnahme eines Stiftes (12) zum Halten, Führen und Einklopfen des Verankerungsteils (10) aufweist.

6. Dentalimplantat nach Anspruch 5,
**dadurch gekennzeichnet, dass**
bei einstückiger Ausbildung von Verankerungsteil (10) und Abutment (20) die Bohrung (11) durch das Abutment (20) in das Verankerungsteil (10) reicht.

7. Dentalimplantat nach einem der Ansprüche 1 - 3,
**dadurch gekennzeichnet, dass**
das Verankerungsteil (10) getrennt vom Abutment (20) gefertigt ist und eine koaxiale Bohrung (11) zum Befestigen des mit einem entsprechenden Stift (1) versehenen Abutments (20) aufweist, die durch einen Silikonstopfen (13) verschließbar ist.

8. Verfahren zum Herstellen eines Dentalimplantates, umfassend die Schritte
- Herstellen einer 3-dimensionalen, digitalen Abbildung eines Bereiches von Knochen und Zahnfleisch eines Patienten, in welchen das Dentalimplantat einzusetzen ist,
- Anfertigen einer digitalen Repräsentation des Dentalimplantates,
- Fräsen eines Zirkonoxid-Grünkörpers entsprechend dem Dentalimplantat mit Übermaß zur Kompensation einer Schrumpfung,
- Sandstrahlen von Sonderabschnitten des Grünkörpers entsprechend der digitalen Abbildung und der digitalen Repräsentation,
- Gegebenenfalls Anbringen von Bohrungen im Grünkörper und
- Brennen/Sintern des bearbeiteten Grünkörpers.

## Claims

1. Dental implant for a patient, comprising
an anchorage part (10) for anchoring the dental implant in the bone and an abutment (20) for fastening a crown or superconstruction (30) of this kind which is or can be connected to the anchorage part (10), wherein the anchorage part (10) and the abutment are zirconium oxide-based, **characterised in that**
the anchorage part (10) and/or the abutment (20) have/has special portions (40) corresponding to individual dimensions of the bone and/or gums of the patient, which has a roughened surface which is formed to fuse with bone and/or to grow into the gums, wherein the special portions (40) are made on the green compact before this is finally sintered.

2. Dental implant according to Claim 1,
**characterised in that**
the special portions (40) are roughened by means of sandblasting.

3. Dental implant according to any one of the preceding Claims,
**characterised in that**
the transition region between the anchorage part (10) and the abutment (20) is made according to individual dimensions of the bone of the patient, in particular by machining the green compact.

4. Dental implant according to any one of the preceding Claims,
**characterised in that**
the anchorage part and the abutment are formed in one piece.

5. Dental implant according to any one of the preceding Claims,
**characterised in that**
the anchorage part (10) has a surface which is formed for driving into a cylindrical or conical hole in the bone, and a concentric hole (11) for receiving a pin (12) for retaining, guiding and driving in the anchorage part (10).

6. Dental implant according to Claim 5,
**characterised in that**,
if the anchorage part (10) and the abutment (20) are formed in one piece, the hole (11) reaches through the abutment (20) into the anchorage part (10).

7. Dental implant according to any one of Claims 1 - 3,
**characterised in that**
the anchorage part (10) is made separate from the abutment (20) and has a coaxial hole (11) for fastening the abutment (20) provided with a corresponding pin (1), which hole can be closed by a silicone plug (13).

8. Method for producing a dental implant, comprising the steps
- producing a 3-dimensional, digital image of a region of the bone and gums of a patient in which the dental implant is to be inserted,
- producing a digital representation of the dental implant,
- milling a zirconium oxide green compact corresponding to the dental implant with an oversize to compensate for shrinkage,
- sandblasting special portions of the green compact according to the digital image and the digital representation,
- optionally making holes in the green compact and
- firing/sintering the machined green compact.

## Revendications

1. Implant dentaire pour un patient, comprenant
une partie d'ancrage (10) pour l'ancrage de l'implant dentaire dans l'os et un pilier (20) pour la fixation d'une couronne ou d'une supraconstruction similaire (30) qui est assemblée ou qui peut être assemblée avec la partie d'ancrage (10), dans lequel la partie d'ancrage (10) et le pilier sont faits à base d'oxyde de zirconium,
**caractérisé en ce que**
la partie d'ancrage (10) et/ou le pilier (20) comportent et segments spéciaux (40) correspondant aux mesures personnelles des os /ou des gencives du patient qui présentent une surface rendue rugueuse et conçue pour la consolidation avec l'os et/ou l'intégration dans la gencive, les segments spéciaux (40) étant fabriqués sur le corps vert avant le frittage final de celui-ci.

2. Implant dentaire selon la revendication 1,
**caractérisé en ce que**
les segments spéciaux (40) sont rendus rugueux au moyen d'un sablage.

3. Implant dentaire selon l'une quelconque des revendications précédentes,
**caractérisé en ce que**
la zone de transition entre la partie d'ancrage (10) et le pilier (20) est fabriquée en fonction de dimensions individuelles de l'os du patient, en particulier par usinage du corps vert.

4. Implant dentaire selon l'une quelconque des revendications précédentes,
**caractérisé en ce que**
la partie d'ancrage et le pilier sont réalisés d'un seul tenant.

5. Implant dentaire selon l'une quelconque des revendications précédentes,
**caractérisé en ce que**
la partie d'ancrage (10) présente une surface conçue pour l'enfoncement dans un alésage cylindrique ou conique dans l'os et un alésage concentrique (11) pour la réception d'une broche (12) pour le maintien, le guidage et l'enfoncement de la partie d'ancrage (10).

6. Implant dentaire selon la revendication 5,
**caractérisé en ce que**
lorsque la partie d'ancrage (10) et le pilier (20) sont réalisés d'un seul tenant, l'alésage (11) s'étend jusqu'à la partie d'ancrage (10) à travers le pilier (20).

7. Implant dentaire selon l'une quelconque des revendications 1 à 3,
**caractérisé en ce que**
la partie d'ancrage (10) est fabriquée séparément du pilier (20) et comporte un alésage coaxial (11) pour la fixation du pilier (20) muni d'une broche appropriée (1) qui peut être obturé par un bouchon en silicone (13).

8. Procédé pour la fabrication d'un implant dentaire comprenant les étapes de :
- constitution d'une image numérique en 3 dimensions d'une zone de l'os et de la gencive d'un patient dans laquelle l'implant dentaire doit être inséré,
- fabrication d'une représentation numérique de l'implant dentaire,
- fraisage d'un corps vert en oxyde de zirconium en fonction de l'implant dentaire avec un excédent pour la compensation d'un retrait,
- sablage de segments spéciaux du corps vert en fonction de l'image numérique et de la représentation numérique,
- le cas échéant, formation d'alésages dans le corps vert et
- cuisson/frittage du corps vert usiné.
